# EUROPEAN PATENT APPLICATION

(11) **EP 2 884 148 A1**
(43) Date of publication of application: **17.06.2015**
(21) Application number: 13827627.4
(22) Date of filing: 29.07.2013
(51) Int. Cl.: F16L 59/04

(54) **INSULATING MATERIAL AND METHOD FOR PRODUCING SAME**

(30) Priority: 09.08.2012 JP 2012177526; 28.02.2013 JP 2013040050
(71) Applicant: Panasonic Intellectual Property Management Co., Ltd., Osaka-shi, Osaka 540-6207 (JP)
(72) Inventor: IKOMA, Yoshimitsu, Osaka-shi, Osaka 540-6207 (JP); ANDO, Hideyuki, Osaka-shi, Osaka 540-6207 (JP); KUGIMIYA, Kazuma, Osaka-shi, Osaka 540-6207 (JP); SHIBATA, Tetsuji, Osaka-shi, Osaka 540-6207 (JP); HOSOI, Kenta, Osaka-shi, Osaka 540-6207 (JP); HIDAKA, Yasuhiro, Osaka-shi, Osaka 540-6207 (JP)
(74) Representative: Müller-Boré & Partner Patentanwälte PartG mbB
(86) International application number: PCT/JP2013/004571
(87) International publication number: WO 2014/024413

(57) **Abstract**

Provided is a thermal insulator **B** formed by bonding a plurality of aerogel particles **A** with adhesive **2** and a method for producing the same. The aerogel particles **A** have an average particle size of 500 µm or more. The adhesive **2** exists as particles on surfaces of the aerogel particles **A**. A ratio (adhesive/aerogel particle) of an average particle size of the adhesive **2** to the average particle size of the aerogel particles **A** falls within a range of 1/200 to 1/10. For producing the thermal insulator **B**, the adhesive **2** is made of an adhesive powder including thermosetting resin or thermoplastic resin. Obtained thermal insulator **B** has an improved strength and is excellent in thermal insulating properties.

## Description

### TECHNICAL FIELD

The invention relates to a thermal insulator including aerogel particles, and a method for producing the same.

### BACKGROUND ART

As thermal insulators, there have been known foam materials such as urethane foam and phenolic foam (foam-based thermal insulator). The foam materials exert the thermal insulating properties derived from their air bubbles generated by foaming. However, such urethane foam and phenolic foam typically have thermal conductivities higher than the thermal conductivities of the air. It is therefore of advantage to make the thermal conductivities of the thermal insulator less than that of the air, for further improving the thermal insulating properties. As methods for achieving such thermal conductivities that are less than that of the air, there has been known a method of filling air-gaps of the foamed material (such as urethane foam and phenolic foam) with a gas having low thermal conductivities (e.g., chlorofluorocarbon), or the like. However, the method of filling air-gaps with the gas has a concern that the filled gas possibly leaks from the air-gaps over time, and which possibly causes increase in the thermal conductivities.

In recent years, there have been proposed vacuum-based methods for improving the thermal insulating properties. In the methods, for example, porous materials of calcium silicate and/or glass fibers are used and they are maintained at vacuum state of about 10 Pa. However, the vacuum-based thermal insulating methods require the maintenance of the vacuum state, and thus have problems in temporal deterioration and production cost. Moreover, in the thermal insulator based on the vacuum, the shape of the thermal insulator would be restricted because it needs to maintain the vacuum state, and its application field is thus severely limited. Accordingly, the thermal insulator based on the vacuum has been limited in practical use.

Incidentally there has been known a mass of fine porous silica (so-called aerogel) as a material for a thermal insulator that exerts the thermal conductivities lower than that of the air under ordinary pressure. This material can be obtained based on methods disclosed in US4402927, US4432956, and US4610863, for example. According to these methods, the aerogel can be produced by using alkoxysilane (which is also called "silicon alkoxide" and "alkyl silicate") as raw material. Specifically, silica aerogel can be obtained by: hydrolyzing the alkoxysilane under presence of solvent to produce wet gelled compound having silica skeleton as a result of condensation polymerization; and drying the wet gelled compound under supercritical condition, which is no less than a critical point, of the solvent. As the solvent, alcohol, liquefied carbon dioxide, and the like may be used, for example. Aerogel particles, which are particulate materials of the aerogel, have the thermal conductivities lower than that of the air, and thus are useful as raw materials for a thermal insulator.

### CITATION LIST

### PATENT LITERATURE

Patent Literature 1: US4402927
Patent Literature 2: US4432956
Patent Literature 3: US4610863

### SUMMARY OF INVENTION

### TECHNICAL PROBLEM

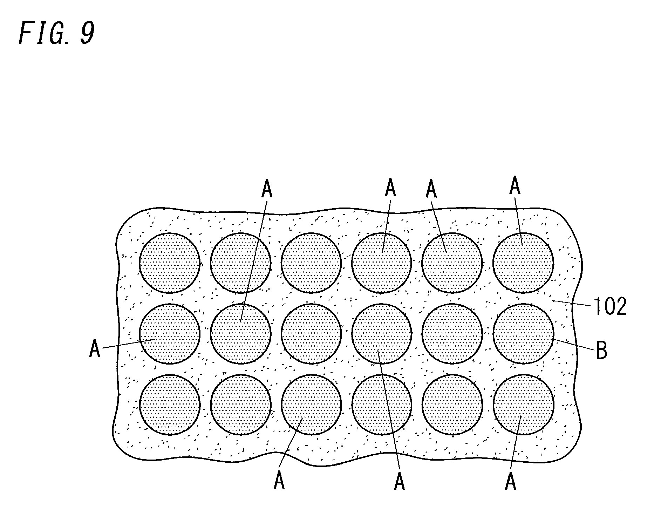

However, since the aerogel particles themselves are brittle, a product of a thermal insulator formed by molding the aerogel particles has a poor strength and is liable to crack and be broken. To increase the strength of the thermal insulator, it may be possible to increase the amount of adhesive, but in this case, the increased amount of adhesive possibly causes decrease --in the thermal insulating properties of the thermal insulator. In detail, as shown in FIG. 9, if the amount of the adhesive is increased, entire surfaces of the aerogel particles **A** would be covered with the adhesive **102,** and also the space between adjacent aerogel particles **A** and **A** would be filled with the adhesive **102.** Thus, the adhesive **102** facilitates heat conduction between front and rear surfaces of the thermal insulator **B,** which would deteriorate the thermal insulating properties of the thermal insulator **B.**

In view of the above circumstances, there is a demand of the thermal insulator that achieves both requirements of sufficient strength and thermal insulating properties by increasing the strength thereof while preventing deterioration in thermal insulating properties.

The present invention has been made in view of the above circumstances, and an object thereof is to propose a thermal insulator which is higher in strength and is excellent in thermal insulation properties, and a method for producing the same.

### SOLUTION TO PROBLEM

A thermal insulator of the invention is a thermal insulator formed by bonding a plurality of aerogel particles with adhesive. The aerogel particles have an average particle size of 500 µm or more. The adhesive exists as particles on surfaces of the aerogel particles. A ratio (adhesive/aerogel particle) of an average particle size of the adhesive to the average particle size of the aerogel particles falls within a range of 1/200 to 1/10.

In the invention, preferably, a particle size distribution of the aerogel particles has a peak at a particle size of 500 µm or more and another peak at a particle size of less than 500 µm.

In the invention, preferably, 5 to 30 parts by mass of the adhesive is included per 100 parts by mass of the aerogel particles.

A method for producing a thermal insulator of the invention is a method for producing any of the above mentioned thermal insulators. In the method, the adhesive is made from an adhesive powder including thermosetting resin, and a difference between a solubility parameter of the adhesive powder in a molten state and a solubility parameter of the aerogel particles is four or more. The method includes: attaching the adhesive powder to surfaces of the aerogel particles; and melting the adhesive powder on the surfaces of the aerogel particles by heat and thereafter curing the adhesive powder so that the aerogel particles are bonded with the cured particles of the adhesive.

A method for producing a thermal insulator of the invention is a method for producing any of the above mentioned thermal insulators. In the method, the adhesive is made from an adhesive powder including thermoplastic resin. The method includes: attaching the adhesive powder to surfaces of the aerogel particles; softening the adhesive powder on the surfaces of the aerogel particles by heating the adhesive powder at a temperature which is lower than a melting point as well as higher than a softening point of the thermoplastic resin; and thereafter cooling the adhesive powder to a temperature lower than the softening point of the thermoplastic resin so that the aerogel particles are bonded with solidified particles of the adhesive.

### ADVANTAGEOUS EFFECTS OF INVENTION

According to the thermal insulator of the invention, the aerogel particles are bonded with the adhesive existing as particles, and the ratio (adhesive/aerogel particle) of the average particle sizes between them falls within the range of 1/200 to 1/10. Accordingly, it is possible to minimize the transfer of heat occurring through the adhesive, and thus the thermal insulator has an increased strength and also is excellent in thermal insulation properties.

According to the method for producing the thermal insulator of the invention, even when the adhesive powder attached to the aerogel particles are heated, the adhesive powder is hard to spread over the surfaces of the aerogel particles and is to form particles. Accordingly, the method makes it easy to bond the plurality of aerogel particles with the particles of the adhesive.

### BRIEF DESCRIPTION OF DRAWINGS

FIG. 1 is a schematic diagram illustrating an example of an embodiment according to the invention;
FIGS. 2A to 2C are schematic diagrams illustrating an example of an aerogel particle;
FIG. 3 is an electron micrograph of an aerogel particle;
FIG. 4 relates to Example 1 and is an electron micrograph showing a surface of an aerogel particle to which particles of adhesive are attached:
FIG. 5 is a schematic diagram illustrating an example of a method for producing a thermal insulator according to the invention;
FIGS 6A to 6D are sectional diagrams illustrating an example of a method of producing a thermal insulator according to the invention;
FIG. 7 is an X-ray CT (computed tomography) image of a thermal insulator according to the Example 1;
FIG. 8 is an X-ray CT image of a thermal insulator according to Comparative Example 3; and
FIG. 9 is a schematic diagram illustrating a conventional example.

### DESCRIPTION OF EMBODIMENTS

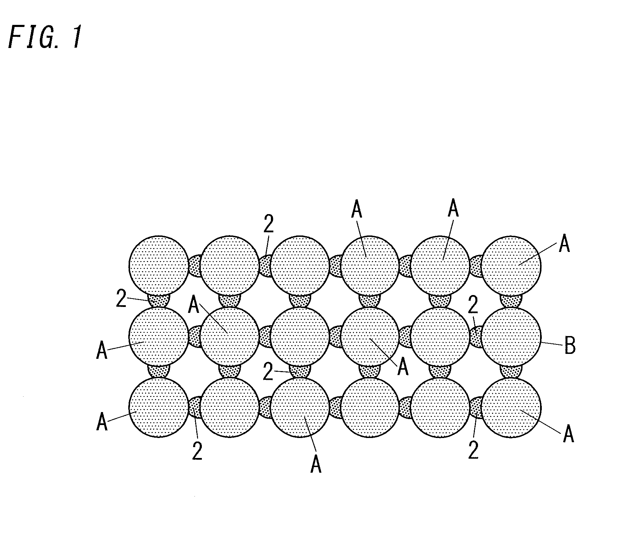

A thermal insulator according to the invention is a thermal insulator **B** formed by bonding a plurality of aerogel particles **A** with adhesive **2.** The aerogel particles **A** have an average particle size of 500 µm or more. The adhesive **2** exists as particles on surfaces of the aerogel particles **A.** A ratio (adhesive/aerogel particle) of an average particle size of the adhesive **2** to the average particle size of the aerogel particles **A** falls within a range of 1/200 to 1/10. FIG. 1 shows a schematic diagram of an example of the thermal insulator **B.**

Aerogel is a porous material (porous body) and is obtained by drying a gel so as to substitute the solvent included in the gel for a gas. Particulate material of the aerogel is called aerogel particle. Known examples of the aerogel include silica aerogel, carbon aerogel, and alumina aerogel, and the silica aerogel is preferably used among them. The silica aerogel is excellent in thermal insulating properties, is easy to produce, and is low in producing cost, and thus is easy to obtain compared to other kind of aerogels. Note that, materials which are produced as a result of full evaporation of solvent in gel and have mesh structures with air gaps may be called "xerogel", but the aerogel of the present specification may include the xerogel.

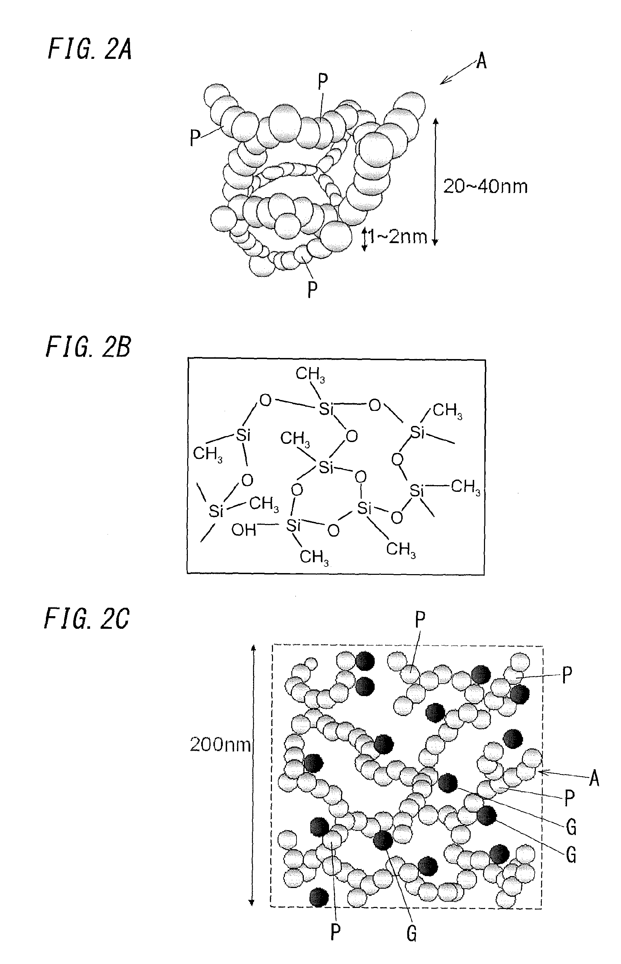

FIGS. 2A to 2C show schematic diagrams of an example of the aerogel particle. As shown in FIGS. 2A and 2B, the aerogel particle **A** is a silica aerogel particle, and is a silica (SiO₂) structure having pores of which size being about 10s nanometers (in a range of 20 to 40 nm, for example). Such aerogel particles **A** can be obtained by a supercritical drying or the like. An aerogel particle **A** is constituted by fine particles **P** (silica microparticles) that are bound to each other so as to form a three dimensional mesh shape. Size of one silica microparticle is, for example, about 1 to 2 nm. As shown in FIG. 2C, gases **G** are allowed to enter the pores, of which sizes are about 10s nanometers, of the aerogel particle **A.** These pores block the transfer of the components of the air such as nitrogen and oxygen, and accordingly it is possible to reduce the thermal conductivities to the extent less than that of the air. For example, a conventional thermal insulator provided with the air has a thermal conductivity (WLF) λ of 35 to 45 mW/m·K, but a thermal conductivity (WLF) λ of a thermal insulator can be reduced to about 9 to 12 mW/ m·K by the aerogel particles **A.** Typically, aerogel particles **A** have hydrophobic properties. For example, in the silica aerogel particle shown in FIG. 2B, most of silicon atoms (Si) are bound to alkyl group(s), and a small number of them are bound to hydroxyl group(s) (OH). This particle therefore has a comparatively low surface polarity.

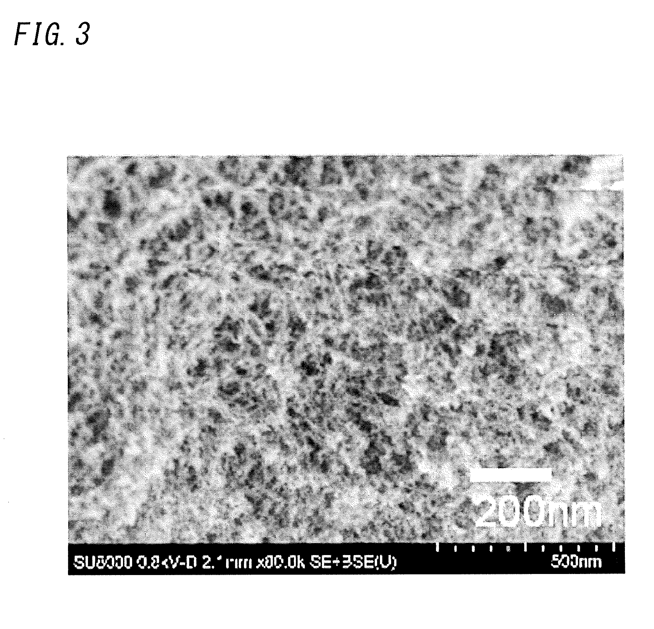

FIG. 3 is an electron micrograph of a silica aerogel particle. This silica aerogel particle was obtained by a supercritical drying method. It can also be understood from this graph that a silica aerogel particle has a three-dimensional steric mesh structure. The mesh structure of an aerogel particle **A** is typically formed of linearly bound silica microparticles having a size of less than 10 nm. Note that, the mesh structure may have ambiguous boundaries between microparticles, and some part of the mesh structure may be formed of linearly extended silica structures (-O-Si-O-).

The aerogel particles for the thermal insulator are not limited particularly, and it is possible to use the aerogel particles obtained by a commonly-used producing method. Typical examples of the aerogel particles include: aerogel particles obtained by the supercritical drying method; and aerogel particles obtained based on liquid glass.

The aerogel particles obtained by the supercritical drying method can be obtained by: preparing silica particles by polymerizing raw material by the sol-gel method which is a liquid phase reaction method; and removing the solvent thereof by the supercritical drying. For example, alkoxysilane (which is also called "silicon alkoxide" or "alkyl silicate") is used as the raw material. The alkoxysilane is hydrolyzed under presence of solvent to generate a wet gelled compound having silica skeleton as a result of condensation polymerization, and thereafter the wet gelled compound is dried under supercritical condition in which a temperature and a pressure are equal to or more than those of a critical point of the solvent. The solvent may be alcohol, liquefied carbon dioxide or the like. According to the drying of the gel compound under the supercritical condition, the solvent thereof is removed while the mesh structure of the gel is maintained, and as a result the aerogel can be obtained. Aerogel particles, which are particulate materials of the aerogel, can be obtained by pulverizing the solvent-including gel into particles, and thereafter drying the particles of the solvent-including gel by the supercritical drying. Alternatively, aerogel particles can be obtained by pulverizing a bulk body of aerogel obtained as a result of the supercritical drying.

The alkoxysilane as the raw material of the aerogel particles is not limited particularly, but may be bifunctional axkoxysilane, trifunctional axkoxysilane, tetrafunctional axkoxysilane, or a combination of them. Examples of the bifunctional alkoxysilane include dimethyldimethoxysilane, dimethyldiethoxysilane, diphenyldiethoxysilane, diphenyldimethoxysilane, methylphenyldiethoxysilane, methylphenyldimethoxysilane, diethyldiethoxysilane, and diethyldimethoxysilane. Examples of the trifunctional alkoxysilane include methyltrimethoxysilane, methyltriethoxysilane, ethyltrimethoxysilane, ethyltriethoxysilane, phenyltrimethoxysilane, and phenyltriethoxysilane. Examples of the tetrafunctional alkoxysilane include tetramethoxysilane, and tetraethoxysilane. Bis(trimethylsilyl)methane, bis(trimethylsilyl)ethane, bis(trimethylsilyl)hexane, or vinyltrimethoxysilane may be used as the alkoxysilane. Partial hydrolysate of the alkoxysilane may be used as the raw material.

The hydrolysis and the condensation polymerization of the alkoxysilane are preferably performed under presence of water, and more preferably performed under presence of a mixed liquid of water and organic solvent which the alkoxysilane is soluble in and is compatible with water. Use of such a mixed liquid as the solvent makes it possible to perform the hydrolysis process and the condensation polymerization process in succession, and accordingly the gel can be obtained efficiently. In this process, the polymer is generated as a gelled substance (wet gel) exists in the solvent as dispersion medium. The solvent which the alkoxysilane is soluble in and is compatible with water is not limited particularly. Examples of such a solvent include: alcohol such as methanol, ethanol, propanol, isopropanol and butanol; acetone; and N,N-dimethylformamide. These materials may be used alone or in combination.

It is also preferable that the hydrolysis and the condensation polymerization of the alkoxysilane be performed under presence of catalyst which causes to desorb the alkoxy group from the alkoxysilane to facilitate the condensation reaction. Examples of such a catalyst include acidic catalyst and basic catalyst. Specifically, examples of the acidic catalyst include hydrochloric acid, citric acid, nitric acid, sulfuric acid, and ammonium fluoride. Examples of the basic catalyst include ammonia and piperidine.

An appropriate component may be added to the reaction solution of the alkoxysilane. Examples of such a component may include a surface-activating agent and a functional group induction agent. Such an additional component can provide a favorable function on the aerogel particles.

The aerogel can be obtained by drying the obtained wet gel by the supercritical drying. It is preferable that the wet gel be firstly cut or pulverized into particles to prepare the particles of the solvent including-gel, and thereafter the particles of the gel be dried by the supercritical drying. By doing so, the aerogel can be made into particles and dried without fracturing aerogel structure, and accordingly aerogel particles can be obtained easily. In this case, it is preferable to prepare the particles of gel in uniform size, and which enables the aerogel particles to be equalized in size. Alternatively, the aerogel particles may be obtained by preparing a bulk aerogel, and thereafter pulverizing the bulk body of aerogel by a pulverizing device. The obtained aerogel particles may be sieved or classified so as to give aerogel particles with more equal sizes. When sizes of aerogel particles are equalized, handleability can be improved and it is possible to easily obtain a stable product.

The aerogel particles obtained based on the liquid glass can be produced by an ordinary pressure drying method that includes sequential processes of a preparation process of silica sol, a gelling process of the silica sol, a ripening process, a pulverizing process of the gel, a solvent substitution process, a hydrophobizing process and a drying process. The liquid glass generally may be a high concentration aqueous solution of mineral silicate such as sodium silicate, and can be obtained by dissolving the mineral silicate in the water and heating it, for example.

The raw material of the silica sol may be silicate alkoxide, silicate of alkaline metal, or the like. Examples of the silicate alkoxide include tetramethoxysilane and tetraethoxysilane. The alkoxysilane described in the explanation regarding the supercritical drying method can be used as the silicate alkoxide. The silicate of alkaline metal may be potassium silicate, sodium silicate or the like. It is preferable to use the silicate of alkaline metal because it is inexpensive, and it is more preferable to use the sodium silicate because it is easily available.

In a case of using the silicate of alkaline metal, silica sol can be prepared by a method using a deacidification with an inorganic acid such as hydrochloric acid and sulfuric acid, or a method using a cation exchange resin having counter ion of H⁺. Among these methods, it is preferable to use a cation exchange resin.

The silica sol can be prepared by using an acid type cation exchange resin by passing a solution of silicate of alkaline metal having a proper concentration through a packed layer filled with the cation exchange resin. Alternatively, the silica sol can be prepared by: introducing a cation exchange resin into a solution of silicate of alkaline metal; mixing them; removing the alkaline metal; and thereafter removing the cation exchange resin by, for example, filtering. The amount of the cation exchange resin is preferably no less than an amount required to exchange the alkaline metal included in the solvent. The solvent is subject to dealkalization (demetallation) by the cation exchange resin.

The acid type cation exchange resin may be styrene-based, acrylic-based one, or methacryl-based, and have a replaced sulfonic acid group or carboxyl group as the ion-exchange group, for example. Among them, it is preferable to use, so-called strong acid type cation exchange resin provided with the sulfonic acid group. The cation exchange resin used for the exchange of the alkaline metal can be reused after regeneration process by passing sulfuric acid or hydrochloric acid therethrough.

The prepared silica sol is thereafter gelled, and then which is ripened. In the gelling process and the ripening process, it is preferable to control the pH thereof. Typically, the silica sol after the ion exchange process by the cation exchange resin has a comparatively low pH of, for example, 3 or less. When such a silica sol is neutralized so that the pH thereof is in a pH range of mild acidity to neutrality, the silica sol is gelled. The silica sol can be gelled by controlling the pH thereof into a range of 5.0 to 5.8, and preferably into a range of 5.3 to 5.7. The pH thereof can be controlled by adding base and/or acid. The base may be aqueous ammonia, sodium hydroxide, potassium hydroxide, silicate of alkaline metal, or the like. The acid may be hydrochloric acid, citric acid, nitric acid, sulfuric acid, or the like. The pH-controlled gel is ripened in a stable state. The ripening process may be performed under a temperature in a range of 40 to 80°C for a time period of 4 to 24 hour.

After the ripening process, preferably, the gel is pulverized. Desired aerogel particles can be easily obtained by the pulverization of the gel. The pulverizing process of the gel can be performed, for example, by: putting the gel in a Henshall type mixer or gelling the sol inside the mixer; and operating the mixer at a proper rotating speed for a proper period.

After the pulverizing process, preferably, the solvent substitution process is performed. In the solvent substitution process, the solvent (such as water) used for preparing the gel is substituted for another solvent having small surface tension in order to avoid the occurrence of drying shrinkage when the gel is dried. The solvent substitution process typically includes multiple steps, and preferably, two steps, because it is difficult to directly substitute water for the solvent having small surface tension. A criterion for selecting a solvent used for the first step may include: having good affinity with both water and a solvent used for the second step. The solvent used for the first step may be methanol, ethanol, isopropyl alcohol, acetone or the like, and ethanol is preferable. A criterion for selecting a solvent used for the second step may include: having less reactivity with a treatment agent used in a following hydrophobizing process; and having small surface tension so as to cause less drying shrinkage. The solvent used for the second step may be hexane, dichloromethane, methyl ethyl ketone or the like, and hexane is preferable. An additional solvent substitution step may be performed between the first solvent substitution step and the second solvent substitution step, as needed.

After the solvent substitution process, preferably, the hydrophobizing process is performed. Alkylalkoxysilane, halogenated alkylsilane, or the like can be used for a treatment agent in the hydrophobizing process. For example, dialkyldichlorosilane or monoalkyl trichlorosilane can be used preferably, and dimethildichlorosilane is used more preferably in view of the reactivity and the material cost. The hydrophobizing process may be performed before the solvent substitution process.

After the hydrophobizing process, the obtained gel is isolated from the solvent by filtering, and thereafter the gel is washed to remove the unreacted treatment agent. Thereafter, the gel is dried. The drying process may be performed under the ordinary pressure, and may be performed with heat and/or hot air. The drying process is preferably performed under an inert gas (e.g., nitrogen gas) atmosphere. According to this process, the solvent in the gel is removed from the gel, and thus the aerogel particles can be obtained.

The aerogel particles obtained by the supercritical drying method and the aerogel particles obtained based on the liquid glass have basically the same structure. That is, each of them has a particle structure in which silica microparticles are bound together so as to form a three dimensional mesh shape.

Shape of the aerogel particle is not particularly limited, and may be one of various shapes. Typically, the aerogel particles obtained by the above-mentioned method have indeterminate shapes because the aerogel particles are subject to the pulverizing process or the like. They may be, so to say, in a rock-shape having irregular surface. They also may be in a spherical-shape, a rugby-ball shape, a panel-shape, a flake-shape, a fiber-shape, or the like. The aerogel particles used for the molding may be a mixture of particles having different particle sizes. The sizes of the aerogel particles are not necessarily in uniform, because the particles are adhered to each other to be unified in the molded product.

Regarding a size of an aerogel particle, a maximum length of the particle may fall within a range of 50 nm to 10 mm. In view of strength, ease for treatment, and ease for molding, it is preferable that excessively large particles and excessively small particles be small in number. When the number of excessively small particles is increased and the average particle size of the aerogel particles becomes 500 µm or less, it is difficult to bond the aerogel particles to each other by an adhesive powder available in the market (of which average particle size is typically 30 µm). An increase in an amount of the adhesive powder could bond them to each other, but would also cause a significant decrease in thermal insulating properties of the product (thermal insulator **B**). It is therefore preferable that such particles of which maximum length falls within a range of 100 µm to less than 2 mm be dominant in the aerogel particles.

The aerogel particles having an average particle size of 500 µm or more are used. In this case, it is possible to improve the thermal insulating properties of the molded product of the thermal insulator. The average particle size of the aerogel particles preferably falls within a range of 500 µm to 5 mm, and, more preferably, falls within a range of 500 µm to 1.5 mm. Using the aerogel particles having the particle sizes within the aforementioned ranges makes it easy to produce a thermal insulator of which a ratio of an average particle size of the adhesive to an average particle size of the aerogel particles falls within a range of 1/200 to 1/10. Regarding a structure of a thermal insulator, if a thermal insulator is formed with a lot of air holes thereinside, it is difficult to sufficiently reduce the thermal conductivities, which would lead to a deterioration of the thermal insulating properties. The air holes may be formed as gaps among the aerogel particles. To prevent the generation of the air holes, it is effective that the aerogel particles have an average particle size of 500 µm or more.

It is preferable that a particle size distribution of the aerogel particles have a peak at a particle size of 500 µm or more and another peak at a particle size of less than 500 µm. This makes it easy to pack the aerogel particles densely, and accordingly the thermal insulating properties can be further improved.

Regarding a particle size distribution of the aerogel particles that has a peak at a particle size of 500 µm or more and another peak at a particle size of less than 500 µm, the total number of peaks is not limited and may be two, or three or more so long as the particle size distribution shows two or more peaks as a whole. From the view point of ease in design and production of the thermal insulator, one preferable aspect is that the particle size distribution of the aerogel particles has two peaks.

In a case where the particle size distribution of the aerogel particles has a peak at a particle size of 500 µm or more and another peak at a particle size of less than 500 µm, it is preferable that the value of the particle size of the peak at the particle size of 500 µm or more be the five times or more greater than the value of the particle size of the peak at the particle size of less than 500 µm. This facilitates packing the aerogel particles more densely, and accordingly the thermal insulating properties can be further improved.

An aerogel particle is also called an aerogel bead, and has an indefinite shape and elasticity. Generally speaking, in a case of densely packing rigid particles, it is desirable to use a group of the particles showing a particle size distribution having multiple peaks at different particles sizes, and the preferred particle sizes of the peaks can be calculated by a simulation. However, the aerogel particle has a low rigidity and is likely to change its shape due to application of pressure, and thus it is not appropriate to use the simulation regarding the rigid particle. This makes it difficult to estimate the preferable particle size distribution of the aerogel particles. Thus, in order to prepare a group of the aerogel particles showing a particle size distribution having multiple peaks, it is preferable to follow the steps of: producing a product by use of a group of aerogel particles having relatively large particle sizes; measuring sizes of air holes in the product by an X-ray CT method or the like; and adding an additional group of aerogel particles of which sizes are suitable for the air holes. For example, by adding an additional group of aerogel particles having an average particle size of 100 µm to a group of aerogel particles having an average particle size of 1 mm, it is possible to eliminate about 50% of air holes and to improve the thermal insulating properties.

The thermal insulator of the invention is formed by bonding the aerogel particles as described above by the adhesive.

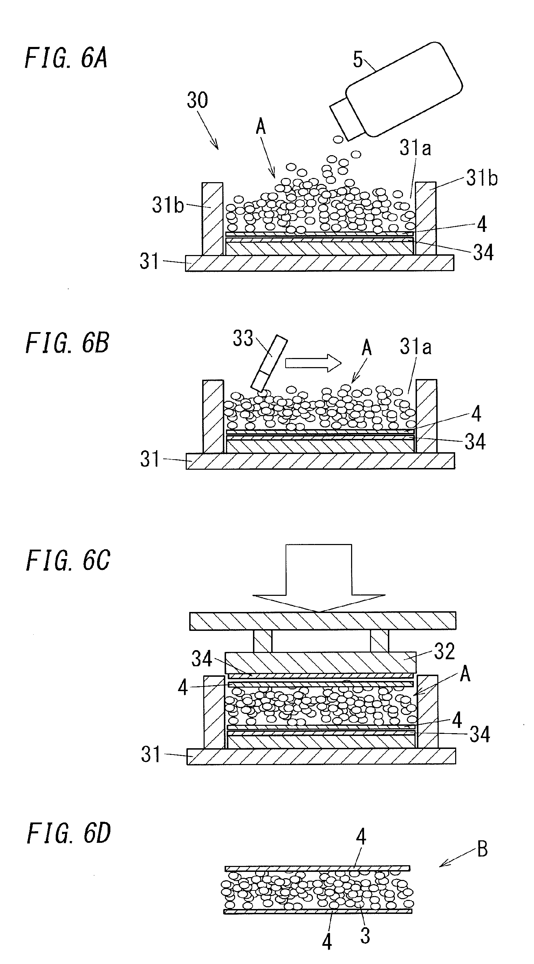

FIG. 6D shows an example of a thermal insulator in an embodiment. The thermal insulator **B** is constituted by a molding product of the aerogel particles **A** (called aerogel layer **3**) and surface sheets **4**. In this aspect, the thermal insulator **B** is formed as a board-like thermal insulator **B** (thermal insulating board). Note that, by molding with a proper molding tool or the like, the thermal insulator **B** can be formed into a shape other than a board shape. The thermal insulator **B** has a structure in which the surfaces sheets **4** are respectively placed on opposite surfaces of the aerogel layer **3** formed of bonded aerogel particles **A.** By covering the aerogel layer **3** with the surface sheet **4,** it is possible to increase the strength of the thermal insulator **B.** A surface sheet **4** may be placed on only one of opposite surfaces of an aerogel layer **3,** but it is preferable that the surface sheets **4** are placed on the respective opposite surfaces of the aerogel layer **3** to increase the strength. Note that, the surface sheet **4** is optional, and may be omitted. A shape of the thermal insulator **B** is, preferably, a board-like shape in view of easy application to a building material, but is not limited thereto. The thermal insulator **B** can be formed into a desired shape in accordance with the intended use. A thickness of the thermal insulator **B** (dimension thereof in a stacking direction of the aerogel layer **3** and the surface sheets **4**) can be appropriately determined in accordance with desired thermal insulating properties and the intended use, and may be in a range of 0.1 to 100 mm.

The aerogel layer **3** is formed by bonding the plurality of aerogel particles **A** by gluing together with the adhesive **2**. From the point of view of reducing the thermal conduction, it is preferable that the adhesive **2** have comparatively small thermal conductivities. From the point of view of increasing the reinforcing effect, it is preferable that the adhesion strength of the adhesive **2** be excellent. It is preferable that the adhesion **2** be prevented from intruding into fine pores of the aerogel particles **A.** When the adhesive **2** intrudes into fine pores of the aerogel particles **A**, this intruding adhesive **2** may increase the thermal conductivities of the aerogel particles **A** to cause deterioration in thermal insulating properties.

As illustrated in FIG. 1, adjacent aerogel particles **A** are bonded to each other with the adhesive **2** existing as particles. FIG. 1 shows a view in which the aerogel particles **A** and the particles of the adhesive **2** are placed regularly, but is merely a schematic view. In a practical thermal insulator **B,** the aerogel particles **A** and the particles of the adhesive **2** may be bonded irregularly. What is needed is that the adhesive **2** is not placed like a line between the aerogel particles **A** and that the adhesive **2** is segmented into like particles. For example, the particles of the adhesive **2** may be placed like dots or placed like islands.

The particles of the adhesive **2** may be placed dispersedly in the thermal insulator **B.** The particles of the adhesive **2** are placed between adjacent aerogel particles **A.** The thermal insulator **B** may be formed by closely-packing a plurality of aerogel particles **A**, and gaps are formed between the plurality of aerogel particles **A** in this structure. The particles of the adhesive **2** may be placed in the gaps between the plurality of aerogel particles **A.**

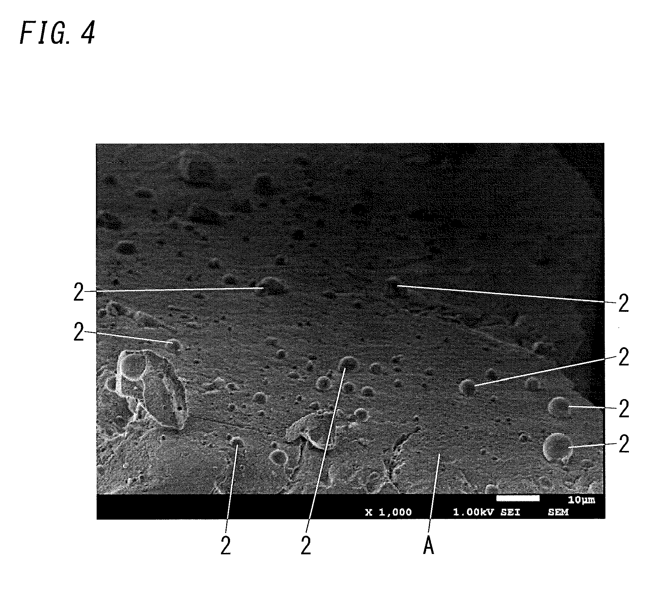

FIG. 4 is an electron micrograph showing an example of a surface of an aerogel particle **A** to which particles of adhesive are attached. FIG. 4 is a graph of a silica aerogel particle **A** prepared according to Example 1 described later. In FIG. 4, each particle of the adhesive **2** has a substantially spherical or a substantially semi-spherical shape and is attached to the surface of the aerogel particle **A. A** shape of a particle of the adhesive **2** may be a proper shape. **A** sectional shape of a particle of the adhesive **2** may be a circle, an ellipse, a polygon, or the like, for example. **A** sectional shape a particle of the adhesive **2** may be an indefinite shape.

The ratio (adhesive/aerogel particle) of the average particle size of the adhesive **2** to the average particle size of the aerogel particles **A** falls within a range of 1/200 to 1/10. An average particle size in this case is defined as a diameter of a true circle of which area corresponds to a sectional area of a particle. The ratio (adhesive/aerogel particle) between the average particle sizes preferably falls within a range of 1/150 to 1/20. The average particle size of the adhesive **2** and the average particle size of the aerogel particles **A** can be obtained respectively from a sectional area of a particle of the adhesive **2** and a sectional area of an aerogel particle **A** which are taken by the X-ray CT method. For example, it is possible to adopt an average value regarding 100 particles of the adhesive **2**, and an average value regarding 100 particles of the aerogel particles **A.** In a case where the ratio (adhesive **2**/aerogel particle **A**) of the average particle size of the adhesive **2** to the average particle size of the aerogel particles **A** falls within the range of 1/200 to 1/10, adjacent aerogel particles **A** can be easily bonded to each other by gluing them together with a particle(s) of the adhesive **2**. The ratio (adhesive **2**/aerogel particle **A**) of the average particle size of the adhesive **2** to the average particle size of the aerogel particles **A** preferably falls within the range of **1/150** to 1/20. The ratio (adhesive **2**/aerogel particle **A**) of the average particle size of the adhesive **2** to the average particle size of the aerogel particles **A** more preferably falls within a range of 1/100 to 1/50.

The average particle size of the aerogel particles **A** can be measured before the molding with an appropriate particle size analyzer. An example of the particle size analyzer is a laser diffraction particle size distribution measuring device. In a case of using an adhesive powder **2** (powder of adhesive material), an average particle size of the adhesive powder **2** can be measured before the molding with an appropriate particle size analyzer. An example of the particle size analyzer is a laser diffraction particle size distribution measuring device. Regarding the adhesive powder **2,** in an assumption that one particle of the adhesive **2** is made from one particle of the adhesive powder without the powder bonding to each other in the molding, the average particle size of the adhesive **2** in the molded product can be approximated by an average particle size of the adhesive powder **2.** Therefore, by controlling the average particle size of the aerogel particles **A** and that of the adhesive powder 2 before the molding, it is possible to satisfy the above request regarding the ratio of the average particle sizes after the molding. It is preferable that a ratio of the average particle size of the aerogel particles A to the average particle size of the adhesive powder 2 before the molding fall within the above-mentioned range. Regarding the adhesive 2 in the molded product, one particle of the adhesive 2 (cured particle or solidified particle) may be made from more than one particle of the adhesive powder.

The average particle size of the aerogel particles A can be measured after the molding by: melting the adhesive 2 with a solvent medium or the like to extract individual aerogel particles **A** as separated particles; dispersing the extracted aerogel particles **A**; and measuring the average particle size of them with a particle size analyzer. This measuring method is effective in a case where the aerogel particles **A** show large variations in particle size. The value obtained by this method may be used as the average particle size of the aerogel particles **A.** However, the value measured by the X-ray CT method is preferentially used as the average particle size.

It is preferable that the particles of the adhesive **2** be placed at intervals so as not to be in contact with each other. That is, adjacent particles of the adhesive **2** are placed with a space in-between. Since the particles of the adhesive **2** are not in contact with each other, less thermal paths would be formed. As a result, it is possible to increase the thermal insulating properties.

It is preferable that a surface of an aerogel particle **A** be not covered with the adhesive **2.** When a surface of an aerogel particle **A** is covered with the adhesive **2,** this adhesive **2** may occlude fine pores of the aerogel particle **A** to cause deterioration in thermal insulating properties of the aerogel particle **A.** Besides, if a surface of an aerogel particle **A** is covered with the adhesive **2,** a thermal path may be easily formed therefor.

In the thermal insulator **B,** the plurality of aerogel particles **A** are bonded with the particles of the adhesive **2**. Therefore, adjacent aerogel particles **A** are bonded in a manner of point contact (point connection). Accordingly, it is possible to minimize the transfer of heat between the aerogel particles **A** and **A** via the adhesive **2.** As a result, it is possible to minimize the reduction in thermal insulating properties while the bonding between the aerogel particles **A** and **A** by the adhesive **2** is improved.

The adhesive **2** may include either cured thermosetting resin or solidified thermoplastic resin. The adhesive **2** may be composed of the cured thermosetting resin only. Alternatively, the adhesive **2** may be composed of the solidified thermoplastic resin only. Alternatively, the adhesive **2** may further include an appropriate additive in addition to the cured thermosetting resin or the solidified thermoplastic resin.

It is preferable that thermosetting resin included in material of the adhesive (adhesive material) **2** have, in a molten state, properties repelled by a surface of the aerogel particle **A.** As described later, the thermosetting resin in the adhesive material **2** is to be melted by heat and then cured to bond the particles in a producing process of the thermal insulator **B.** Therefore, if the thermosetting resin in the adhesive material **2** has, in a molten state, the properties of being repelled by the surface of the aerogel particle **A** and thus is less likely to spread over the surface, the adhesive **2** is likely to form particles. In order to make the melted adhesive material **2** less likely spread over the surface of the aerogel particle **A**, it is preferable that the adhesive material **2** include the thermosetting resin having the properties repelled by the surface of the aerogel particle **A.** Preferably, the feature that "an adhesive material **2** has properties repelled by a surface of an aerogel particle **A**" is quantitatively defined as that a difference between a solubility parameter (referred also to as "SP value") of the adhesive material **2** in a molten state and a solubility parameter of the aerogel particles **A** is four or more. Degree of the properties of the adhesive material **2** repelled by the surface of the aerogel particle **A** is determined based on types and/or structures (types of functional group, polymerization degrees, and the like) of the thermosetting resin in the adhesive material **2.** It is preferable that the thermosetting resin in the adhesive material **2** be hydrophilic in a molten state. In this case, the adhesive material **2** in a molten sate is likely to be repelled by the surface of the aerogel particle **A** that has hydrophobic properties, and accordingly the adhesive material **2** in the form of particles can be easily attached to the surfaces of the aerogel particles **A.** Specifically, it is preferable that the adhesive material **2** include therein thermosetting resin which is at least one selected from phenolic resin, melamine resin, urea resin, epoxy resin and the like.

The SP value of the adhesive powder (powder of adhesive material) **2** in a molten state can be calculated from a molecular structure of the adhesive material **2** obtained based on the group contribution method. The SP value of the aerogel particles **A** can be calculated, based on the group contribution method, from a molecular structure of a surface preparation agent that modifies the surfaces of the aerogel particles **A.** It is preferable that the difference between the SP value of the adhesive material **2** in a molten state and the SP value of the aerogel particles **A** become larger and larger, and thus the upper limit of the difference is not limited particularly. For example, the difference may be 20 or less.

In order to achieve an increased strength without deteriorating the high thermal insulating properties, it is preferable to use an adhesive material **2** including thermosetting resin having high flexibilities. For example, in a case of using a rubber-modified, cashew-modified, or epoxy-modified phenolic resin, it is possible to increase the strength without deteriorating the thermal insulating properties. In the embodiment, the "high flexibility" means that the resin has a large tan δ value measured in the dynamic viscoelasticity measuring method and has a reduced crosslink density.

Besides, it is possible to use a hot-melt adhesive as the adhesive material **2** including the thermoplastic resin. As described later, the thermoplastic resin in the adhesive material **2** is merely soften in a producing process of the thermal insulator **B,** and thus is not required to be melted. Therefore, the thermoplastic resin in the adhesive material **2** is less likely to spread over a surface of an aerogel particle **A**, and the adhesive **2** is likely to form particles. It is therefore possible to use the thermoplastic resin of the generally available hot-melt adhesive as the adhesive material **2.** Specifically, it is preferable that the adhesive material **2** include therein thermoplastic resin which is at least one selected from ethylene-acrylate copolymer, polyethylene resin, polypropylene resin, polystyrene resin, ethylene-vinyl acetate copolymer, polyamide resin, polyester resin and the like.

It is preferable that the thermal insulator **B** include 5 to 30 parts by mass of the adhesive **2** per 100 parts by mass of the aerogel particles **A.** The content ratio between the aerogel particles **A** and the adhesive **2** is appropriately determined in consideration of the types of the adhesive **2** and/or the thermal insulating properties and the strength of the thermal insulator **B.** The content ratio can be determined preferably based on the adhesion properties and the thermal insulating properties. In view of this, it is possible to mix 100 parts by mass of the aerogel particles **A** with 5 to 30 parts by mass, and preferably 10 to 25 parts by mass, of the adhesive **2,** for example. The thermal insulator **B** would show that thermal conductivities and strength thereof tend to decrease with a decrease in the adhesive **2.** The thermal insulator **B** would show that strength and thermal conductivities thereof tend to increase with an increase in the adhesive **2.** It is therefore more preferable that thermal insulator **B** include 10 to 20 parts by mass of the adhesive **2** per 100 parts by mass of the aerogel particles **A.**

The density of the thermal insulator **B** significantly affects on the thermal insulating properties. The density of the thermal insulator **B** can be determined in consideration of prepared amounts of the aerogel particles **A** and the adhesive **2,** and the thickness of the thermal insulator **B.** A decrease in density of the thermal insulator **B** would lead to the deterioration in thermal insulating properties because air layers may be formed inside the thermal insulator **B,** whereas an increase in density thereof would lead to the decrease in thermal conductivities because thermal bridges may be formed by the adhesive **2.** The density of the thermal insulator **B** may fall within a range of 0.1 to 0.5 g/cm³, for example. In this case, handling of the thermal insulator **B** is facilitated. In an example of the thermal insulator **B** which is produced from 17 parts by mass of the adhesive **2** per 100 parts by mass of the aerogel particles **A**, the density of a board (thermal insulator **B**) would fall within a range of 0.13 to 0.21 g/cm³.

In the thermal insulator **B,** it is preferable that a ratio in volume (adhesive **2**/aerogel particle **A**) of the adhesive **2** to the aerogel particles **A** fall within a range of 0.003 to 0.05. In this case, it is possible to prevent the adhesive **2** from forming a thermal path and also to increase the strength of the thermal insulator **B.** The ratio in volume can be obtained by analyzing the X-ray CT image. The ratio in volume (adhesive **2**/aerogel particle **A**) of the adhesive **2** to the aerogel particles **A** more preferably falls within a range of 0.006 to 0.04, and further preferably falls within a range of 0.006 to 0.03.

A ratio in area (adhesive **2**/aerogel particle **A**) which is a ratio of the area occupied by the adhesive **2** to the area occupied by the aerogel particles **A** in a section of the thermal insulator **B**, preferably falls within a range of 0.004 to 0.04. In this case, it is possible to prevent the adhesive **2** from forming a thermal path and also to increase the strength of the thermal insulator **B**. The ratio in area can be obtained by analyzing the X-ray CT image. The ratio (adhesive **2**/aerogel particle **A**) of the area occupied by the adhesive **2** to the area occupied by the aerogel particles **A** more preferably falls within a range of 0.006 to 0.04, and further preferably falls within a range of 0.006 to 0.03.

Hereinafter, a method for producing the thermal insulator **B** is explained.

Firstly, adhesive material **2** is attached to surfaces of aerogel particles **A.** In this case, it is preferable that the adhesive material **2** be in the form of powder at ordinary temperatures. In this case, particles of the adhesive material **2** can be easily attached to the aerogel particles **A.** As a method for attaching the adhesive material **2** to the aerogel particles **A**, it is possible to use a method of stirring them by a powder mixer, for example. For the attachment, it is preferable that the adhesive material **2** have such a viscosity that the adhesive material **2** does not harden itself but can be attached to the aerogel particles **A.** In this process, to increase the viscosity of the adhesive **2**, they may be mixed while a little amount of liquid such as water is added thereto as well as they are subject to drying.

It is preferable that an average value of particle sizes (size) of the adhesive powder **2** be smaller than an average value of particle sizes (size) of the aerogel particles **A.** In this case, particles of the adhesive material 2 can be easily attached to the aerogel particles **A.** The average particle size of the adhesive material **2** which is in the form of powder under ordinary temperatures can be obtained from a sectional area of the adhesive material **2** taken by the X-ray CT method, as with the average particle size of the adhesive **2** existing as particles or that of the aerogel particles **A.** For example, it is possible to adopt an average value regarding 100 particles of the adhesive powder **2.** Alternatively, the average particle size thereof may be obtained using a particle size distribution measuring device.

It is preferable that a ratio (adhesive **2**/aerogel particle **A**) of the average particle size of the adhesive powder **2** as raw material to the average particle size of the aerogel particles **A** fall within a range of 1/200 to 1/10. Satisfying this condition makes it possible to bond the aerogel particles **A** with the particles of the adhesive **2** while the ratio of the average particle sizes between them falls within the above range after the molding.

The aerogel particles **A** which can be used have an average particle size of 500 µm or more. As long as the aerogel particles **A** have the average particle size of 500 µm or more, the aerogel particles **A** may have a particle size distribution that has a peak at a particle size of 500 µm or more and another peak at a particle size of less than 500 µm. It may be possible to use, in combination, a group of relatively large sized-aerogel particles **A** having a particle size distribution that has a peak at a particle size of 500 µm or more and a group of relatively small sized-aerogel particles **A** having a particle size distribution that has a peak at a particle size of less than 500 µm. In a case of using the aerogel particles **A** having different particle size in combination, what is needed is that the mixed aerogel particles **A** has an average particle size of 500 µm or more.

In a case of mixing a group of relatively large sized-aerogel particles **A** and a group of relatively small sized-aerogel particles **A**, it is preferable that the amount of the group of relatively large sized-acrogel particles **A** be larger than the amount of the group of relatively small sized-aerogel particles **A.** It is preferable that the amount of the group of relatively large sized-aerogel particles **A** be no less than three times the amount of the group of relatively small sized-aerogel particles **A.** In a case where the amount of the group of relatively large sized-aerogel particles **A** is large, the relatively small sized-aerogel particles **A** can be put in spaces between the relatively large sized-aerogel particles **A.** Accordingly, it is possible to pack the aerogel particles **A** more densely. The amount of the group of relatively large sized-aerogel particles **A** may be no more than twenty times as large as the amount of the group of relatively small sized-aerogel particles **A**, and be no more than ten times as large as the amount of the group of relatively small sized-aerogel particles **A.**

**A** preferable range of an average particle size of the group of relatively large sized-aerogel particles **A** may be the range explained above regarding the aerogel particles **A**. An average particle size of the group of relatively small sized-aerogel particles **A** is preferably no more than one-third of the average particle size of the group of relatively large sized-aerogel particles **A**, and more preferably no more than one-fifth of the average particle size of the group of relatively large sized-aerogel particles **A.** The average particle size of the group of relatively small sized-aerogel particles **A** may be 50 µm or more, and be 100 µm or more, for example. The average particle size of the group of relatively small sized-aerogel particles **A** may be 400 µm or less, and be 300 µm or less, for example.

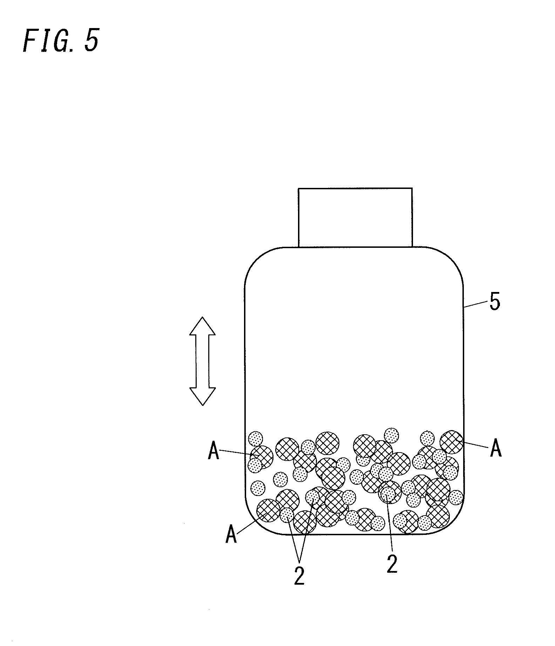

FIG. 5 illustrates an example of a method of attaching the adhesive material **2** to the aerogel particles **A.** As shown in FIG. 5, for attaching the adhesive material **2** to the aerogel particles **A,** for example, the aerogel particles **A** and the adhesive powder **2** are firstly put in a bottle **5,** the bottle **5** is then sealed off by, for example, closing a lid thereof, and thereafter the bottle **5** is shaken. By doing so, the aerogel particles **A** and the adhesive material **2** are mixed in powder level, and accordingly the aerogel particles **A** to which the adhesive material **2** is attached can be obtained. In the manufacturing stage, they can be mixed in powder level by use of an appropriate powder mixer such as a mill and a mixer. However, since the particles possibly are destroyed with a strong stirring force, it is preferably that they be mixed by a stirring force not causing particle destruction.

Thereafter, the aerogel particles **A** to which the adhesive material **2** is attached are molded with heat and pressure. By this molding process, it is possible to obtain the thermal insulator **B** which is shaped and in which the aerogel particles **A** are bonded with the adhesive **2.**

FIG. 6 illustrates an example of a method for producing a thermal insulator **B** by molding the aerogel particles **A** to which the adhesive material **2** is attached.

As shown in FIG. 6, a pressing machine **30** is used for the molding process. The pressing machine **30** includes a press lower mold **31** and a press upper mold **32.** Firstly, as shown in FIG. 6A, a side wall mold **31b** is installed on the press lower mold **31** so as to form a recess **31a**. A release sheet **34** is put on a bottom face of the recess **31a**, and a surface sheet **4** is then put thereon. Next, the aerogel particles **A** are introduced from the bottle **5** into the recess **31a** above the press lower mold **31.** Note that, the adhesive material (adhesive) **2** is not shown in FIG. 6, but the aerogel particles **A** to which the adhesive material **2** is attached are used for this process. Thereafter, as shown in FIG. 6B, a top plane of the introduced particles is flattened by a smoother **33** such as a medicine spoon, a paddle and the like. Another surface sheet **4** is put on the aerogel particles **A** of which top plane is flattened, and thereafter another release sheet **34** is put thereon. Thereafter, the press upper mold **32** is introduced into the recess **31a** from an upper side, and is pressed with heat and pressure, as shown in FIG. 6C. Preferably, it is pressed with such a pressing force that does not crush or destroy the aerogel particles **A.** By this pressing, the adhesive material **2** exerts the adhesive properties and thus the aerogel particles **A** are glued and bonded to be unified. Moreover, each of the surface sheets **4** is glued to the aerogel particles **A** by the adhesion by the adhesive materials **2** and thus the surface sheets **4** are unified with the molded product of the aerogel particles **A.** After pressing, the resultant product is taken out therefrom, and dried by a drying machine. As a result, the thermal insulator **B** constituted by the molded product of the aerogel particles **A** (aerogel layer **3**) and the surface sheets **4** is formed, as shown in FIG. 6D.

Conditions for heating treatment may be different between a case where the adhesive material **2** includes thermosetting resin and a case where the adhesive material **2** includes thermoplastic resin. By adopting the better heating treatment condition, bonding of the aerogel particles **A** with the particles of the adhesive **2** can be facilitated.

In a case where the adhesive **2** is made from an adhesive powder including thermosetting resin, such an adhesive powder **2** is prepared that a difference between an SP value of the adhesive powder **2** in a molten state and an SP value of the aerogel particles **A** is four or more. The adhesive powder **2** is attached to surfaces of the plurality of aerogel particles **A.** The adhesive powder **2** on the surfaces of the aerogel particles **A** is melted by heat and thereafter cured. As a result, the aerogel particles **A** can be bonded with the cured particles of the adhesive **2.**

In a case where the adhesive **2** is made from an adhesive powder including thermoplastic resin, the adhesive powder **2** is attached to surfaces of the plurality of aerogel particles **A**, and the adhesive powder **2** is heated at a temperature which is lower than a melting point as well as higher than a softening point of the thermoplastic resin. Accordingly, the adhesive powder **2** is softened on the surfaces of the aerogel particles **A.** Thereafter, the adhesive powder is cooled to a temperature lower than the softening point of the thermoplastic resin. As a result, the aerogel particles **A** are bonded with the solidified particles of the adhesive **2.**

That is, in the molding process with heat and pressure, the adhesive material **2** including thermosetting resin and the adhesive material **2** including thermoplastic resin have different heating histories. Specifically, regarding the adhesive material **2** including thermosetting resin, the adhesive material **2,** which is in the form of powder at ordinary temperatures, is heated so that the thermosetting resin included therein is melted by the heat, and thereafter the adhesive material **2** is further heated so as to bond therewith the aerogel particles **A** and then is cured. On the other hand, regarding the adhesive material **2** including thermoplastic resin, the adhesive material **2,** which is in the form of powder at ordinary temperatures, is heated at a temperature which is lower than a melting point as well as higher than a softening point of the thermoplastic resin included in the adhesive material **2** so that the adhesive material **2** is softened. Thereafter, the adhesive material **2** is cooled to a temperature lower than the softening point of the thermoplastic resin included in the adhesive material **2,** and thereby the adhesive material **2** is solidified so as to bond therewith the aerogel particles **A.** Any of the adhesive materials **2** including the thermosetting resin or the thermoplastic resin, it is possible to bond adjacent aerogel particles **A** to each other in a manner of point contact.

The molding condition can be properly selected and adjusted. **A** temperature for molding may fall, for example, within a range of 80 to 200°C, and preferably within a range of 100 to 190°C. A time for molding may fall, for example, within a range of 1 to 60 minutes, and preferably within a range of 5 to 30 minutes. A pressing pressure for the molding may fall within a range of 0.1 to 10 MPa, and preferably within a range of 0.5 to 5 MPa.

Regarding the molding process, the amount of particles per unit volume, namely a packing density, is an important factor. When the packing density is excessively low, the adhesive properties may become poor and the thermal insulating properties may be deteriorated. When the packing density is excessively high, the adhesive **2** may be spread and may be hard to form particles. It is preferable that the aerogel particles **A** and the adhesive **2** be molded under such a packing density that 30 g or less in total amount of them is put in a volume (144 x 10³ mm³) of which length, width, thickness are respectively 120 mm, 120 mm, and 10 mm, for example. It is preferable that the aerogel particles **A** and the adhesive **2** be molded under such a packing density that 15 g or less in total amount of them is put in the above mentioned volume. The aerogel particles **A** and the adhesive **2** are preferably molded under a condition where the packing density regarding the total mass of them falls within a range of 0.1 to 0.5 g/cm³, and more preferably molded under a condition where the packing density regarding the total mass of them falls within a range of 0.13 to 0.21 g/cm³. The density is not limited thereto so long as the aerogel particles **A** can be bonded like point contact.

### EXAMPLES

### (Example 1)

### [Synthetic method of silica aerogel particles]

Used were tetramethoxysilane oligomer ("Methyl Silicate 51", available from COLCOAT CO., Ltd, of which average molecular weight is 470) as alkoxysilane, ethanol (special grade reagent, available from nacalai tesque, inc.) as solvent, water, and aqueous ammonia of 0.01 molecular weight per liter as catalyst. Compounded were 1 mol of the tetramethoxysilane oligomer, 120 mol of the ethanol, 20 mol of the water and 2.16 mol of the aqueous ammonia to produce a sol-like reaction liquid. Thereafter, the sol-like reaction liquid was left in stable state under ordinary temperatures to be gelled to produce a gelled compound.

The gelled compound was then put in a pressure tight case filled with a liquefied carbon dioxide of which the temperature is 18°C and the pressure is 5.4 MPa (55 kgf/cm²), and thereby the ethanol in the gelled compound was displaced for three hours by the carbon dioxide. Thereafter, the condition in the pressure tight case was shifted to a condition where the temperature is 80°C and the pressure is 15.7 MPa (160 kgf/cm²), which is the supercritical condition of the carbon dioxide, and thereby removal of the solvent was conducted for 48 hours. Hexamethyldisilazane as hydrophobizating agent was added to the atmosphere under the supercritical condition at a rate of 0.3 molecular weight per liter, and the hydrophobizating agent was dispersed in the supercritical fluid for two hours, and the gelled compound was remained in the supercritical fluid to be hydrophobized. Thereafter, the gelled compound was flowed therethrough supercritical carbon dioxide and is reduced in pressure, and thereby the ethanol and the hydrophobizating agent were removed from the gelled compound. It took 15 hours from a time point when the hydrophobizating agent is added to a time point when the pressure was reduced. The silica aerogel particles were taken out of the pressure tight case. The silica aerogel particles had a bulk density of 0.086 g/cm³, and an average particle size of 1100 µm. The average particle size was obtained from diameters of true circles corresponding to sectional areas taken by the X-ray CT method regarding 100 particles of the silica aerogel particles. The silica aerogel particles had an SP value of 6.

### [Molding method of thermal insulator]

Stirred were 18 g of the synthesized silica aerogel particles (average particle size of 1.1 mm) and 3 g of powder (average particle size of 20 µm) of phenolic resin ("Kf6004", available from ASAHI ORGANIC CHEMICALS INDUSTRY CO. LTD., of which SP value is 11 or more) as adhesive material including thermosetting resin, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to cure the adhesive material, and as a result the mixture was molded into a desired size. The pressing molding was performed under a condition where a mold temperature was 180°C, a pressing pressure was 0.98 MPa (10 kgf/cm²), and a pressing time was 15 minutes. Consequently, a thermal insulator was obtained.

In the thermal insulator, a ratio (adhesive/silica aerogel particle) of an average particle size of the particles of the adhesive to an average particle size of the silica aerogel particles was 1/30.

### (Example 2)

Stirred were 18 g of the silica aerogel particles (average particle size of 1.1 mm) synthesized according to the process of the Example 1 and 4 g of powder (average particle size of 20 µm) of PE powder (softening point of 95°C and melting point of 130°C) as adhesive material including thermoplastic resin, by a disper for three minutes to homogeneously mix them. Note that PE stands for polyethylene. The resultant mixture of the silica aerogel particles and the adhesive material was put in a mold of which length, width, and thickness were respectively 120 mm, 120 mm, and 10 mm, and was subject to a pressing molding to soften the adhesive material thereof, and as a result the mixture was molded into a desired size. The pressing molding was performed under a condition where a mold temperature was 110°C, a pressing pressure was 0.98 MPa (10 kgf/cm²), and a pressing time was 10 minutes. The resultant mixture was cooled to ordinary temperatures to solidify the adhesive thereof, and consequently a thermal insulator was obtained.

In the thermal insulator, a ratio (adhesive/silica aerogel particle) of an average particle size of the particles of the adhesive to an average particle size of the silica aerogel particles was 1/10.

### (Example 3)

Stirred were 18 g of the silica aerogel particles (average particle size of 1.1 mm) synthesized according to the process of the Example 1 and 6 g of powder (average particle size of 20 µm) of phenolic resin ("Kf6004", available from ASAHI ORGANIC CHEMICALS INDUSTRY CO. LTD., of which SP value is 11 or more) as adhesive material including thermosetting resin, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to cure the adhesive material thereof, and as a result the mixture was molded into a desired size. The pressing molding was performed under a condition where a mold temperature was 180°C, a pressing pressure was 0.98 MPa (10 kgf/cm²), and a pressing time was 15 minutes. Consequently, a thermal insulator was obtained.

In the thermal insulator, a ratio (adhesive/silica aerogel particle) of an average particle size of the particles of the adhesive to an average particle size of the silica aerogel particles was 1/30.

### (Example 4)

Stirred were 18 g of the silica aerogel particles (average particle size of 1.1 mm) synthesized according to the process of the Example 1 and 3 g of powder (average particle size of 20 µm) of phenolic resin ("TD-696A", available from DIC corporation, of which SP value is 11 or more) as adhesive material including thermosetting resin, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to cure the adhesive material thereof, and as a result the mixture was molded into a desired size. The pressing molding was performed under a condition where a mold temperature was 180°C, a pressing pressure was 0.98 MPa (10 kgf/cm²), and a pressing time was 15 minutes. Consequently, a thermal insulator was obtained.

In the thermal insulator, a ratio (adhesive/silica aerogel particle) of an average particle size of the particles of the adhesive to an average particle size of the silica aerogel particles was 1/30.

### (Example 5)

Stirred were 18 g of the silica aerogel particles (average particle size of 1.1 mm) synthesized according to the process of the Example 1 and 3 g of powder (average particle size of 20 µm) of phenolic resin ("TD-697A", available from DIC corporation, of which SP value is 11 or more) as adhesive material including thermosetting resin, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to cure the adhesive material thereof, and as a result the mixture was molded into a desired size. The pressing molding was performed under a condition where a mold temperature was 180°C, a pressing pressure was 0.98 MPa (10 kgf/cm²), and a pressing time was 15 minutes. Consequently, a thermal insulator was obtained.

In the thermal insulator, a ratio (adhesive/silica aerogel particle) of an average particle size of the particles of the adhesive to an average particle size of the silica aerogel particles was 1/30.

### (Example 6)

Stirred were 21.6 g of the silica aerogel particles (average particle size of 1.1 mm) synthesized according to the process of the Example 1 and 3.6 g of powder (average particle size of 20 µm) of phenolic resin ("KF6004", available from ASAHI ORGANIC CHEMICALS INDUSTRY CO. LTD., of which SP value is 11 or more) as adhesive material including thermosetting resin, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to cure the adhesive material thereof, and as a result the mixture was molded to a desired size. The pressing molding was performed under a condition where a mold temperature was 180°C, a pressing pressure was 0.98 MPa (10 kgf/cm²), and a pressing time was 15 minutes. Consequently, a thermal insulator was obtained.

In the thermal insulator, a ratio (adhesive/silica aerogel particle) of an average particle size of the particles of the adhesive to an average particle size of the silica aerogel particles was 1/30.

### (Example 7)

Synthesis of silica aerogel particles was made by a synthetic method similar to the synthetic method of the silica aerogel particles according to the Example 1 but some conditions were changed appropriately, and thereby silica aerogel particles having an average particle size of 0.15 mm were obtained. The obtained silica aerogel particles had an SP value of 6.

Stirred were 15 g of the silica aerogel particles (average particle size of 1.1 mm) synthesized according to the process of the Example 1, 3 g of the synthesized silica aerogel particles (average particle size of 0.15 mm) obtained according to the above mentioned process, and 3 g of powder (average particle size of 20 µm) of phenolic resin ("KF6004", available from ASAHI ORGANIC CHEMICALS INDUSTRY CO. LTD., of which SP value is 11 or more) as adhesive material including thermosetting resin, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to cure the adhesive material thereof, and as a result the mixture was molded into a desired size. The pressing molding was performed under a condition where a mold temperature was 180°C, a pressing pressure was 0.98 MPa (10 kgf/cm²), and a pressing time was 15 minutes. Consequently, a thermal insulator was obtained.

In the thermal insulator, a ratio (adhesive/silica aerogel particle) of an average particle size of the particles of the adhesive to an average particle size of the silica aerogel particles was 1/25.

### (Comparative Example 1)

A thermal insulator (a monolith of silica aerogel particles), was produced from the silica aerogel particles (average particle size of 1.1 mm) synthesized according to the process of the Example 1, without using any adhesive material.

### (Comparative Example 2)

Stirred were 18 g of the silica aerogel particles (average particle size of 1.1 mm) synthesized according to the process of the Example 1 and 3 g of powder (average particle size of 20 µm) of unsaturated polyester resin (of which SP value is less than 9) as adhesive material including thermosetting resin, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to cure the adhesive material thereof, and as a result the mixture was molded into a desired size. The pressing molding was performed under a condition where a mold temperature was 150°C, a pressing pressure was 0.98 MPa (10 kgf/cm²), and a pressing time was 15 minutes. Consequently, a thermal insulator was obtained.

In this thermal insulator, it was not possible to measure a ratio of an average particle size of the adhesive to an average particle size of the silica aerogel particles, because the adhesive intruded into the pores of the silica aerogel particles and was not attached as particles. This may be caused by their SP values.

### (Comparative Example 3)

Stirred were 18 g of the silica aerogel particles (average particle size of 1.1 mm) synthesized according to the process of the Example 1 and 18 g of powder of phenolic resin ("Kf6004", available from ASAHI ORGANIC CHEMICALS INDUSTRY CO. LTD., of which SP value is 11 or more) as adhesive material mentioned above, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to cure the adhesive material thereof, and as a result the mixture was molded into a desired size. The pressing molding was performed under a condition where a mold temperature was 180°C, a pressing pressure was 0.98 MPa (10 kgf/cm²), and a pressing time was 15 minutes. Consequently, a thermal insulator was obtained.

In this thermal insulator, it was not possible to measure a ratio of an average particle size of the adhesive to an average particle size of the silica aerogel particles, because the adhesive was attached to the surfaces of the silica aerogel particles not like particles, but like layers. This may be caused by the amount of the adhesive.

### (Comparative Example 4)

Stirred were 18 g of the silica aerogel particles (average particle size of 1.1 mm) synthesized according to the process of the Example 1 and 18 g of powder of PE powder (softening point of 95°C and melting point of 130°C) as adhesive material including thermoplastic resin mentioned above, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to soften the adhesive material thereof, and as a result the mixture was molded into a desired size. The pressing molding was performed under a condition where a mold temperature was 200°C, a pressing pressure was 0.98 MPa (10 kgf/cm²), and a pressing time was 10 minutes. The resultant mixture was cooled to ordinary temperatures to solidify the adhesive thereof, and consequently a thermal insulator was obtained.

In this thermal insulator, it was not possible to measure a ratio of an average particle size of the adhesive to an average particle size of the silica aerogel particles, because the adhesive intruded into the pores of the silica aerogel particles and was not attached as particles. This may be caused by the amount of the adhesive and/or the temperature for molding.

### (Comparative Example 5)

Stirred were 27 g of the silica aerogel particles (average particle size of 1.1 mm) synthesized according to the process of the Example 1 and 4.5 g of powder of phenolic resin ("TD-696A", available from DIC corporation, of which SP value is 11 or more) (average particle size of 30 µm) as adhesive material including thermosetting resin, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to cure the adhesive material thereof, and as a result the mixture was molded into a desired size. The pressing molding was performed under a condition where a mold temperature was 180°C, a pressing pressure was 0.98 MPa (10 kgf/cm²), and a pressing time was 15 minutes. Consequently, a thermal insulator was obtained.

In this thermal insulator, it was not possible to measure a ratio of an average particle size of the adhesive to an average particle size of the silica aerogel particles, because the adhesive was attached to the surfaces of the silica aerogel particles not like particles, but like layers. This may be caused by the packing density.

### (Comparative Example 6)

Stirred were 18 g of the silica aerogel particles (average particle size of 0.15 mm) synthesized according to the process of the Example 7 and 3 g of powder of phenolic resin ("Kf6004", available from ASAHI ORGANIC CHEMICALS INDUSTRY CO. LTD., of which SP value is 11 or more) as adhesive material containing thermosetting resin, by a disper for three minutes to homogeneously mix them. The resultant mixture of the silica aerogel particles and the adhesive material was put in a mold of which length, width, and thickness were respectively 120 mm, 120 mm, and 10 mm, and was subject to a pressing molding to cure the adhesive material thereof, and as a result the mixture was molded into a desired size. The pressing molding was performed under a condition where a mold temperature was 150°C, a pressing pressure was 0.98 MPa (10 kgf/cm²), and a pressing time was 15 minutes. Consequently, a thermal insulator was obtained.

In the thermal insulator, a ratio (adhesive/silica aerogel particle) of an average particle size of the particles of the adhesive to an average particle size of the silica aerogel particles was 1/5.

### (Evaluation)

Regarding the thermal insulators obtained in the Examples and the Comparative Examples, their strengths and thermal conductivities were measured. The strength was measured based on JIS K7221. The thermal conductivities was measured based on JIS A1412. Table 1 shows the results of them.

An electron micrograph of the aerogel particle to which the adhesive was attached prepared according to the process of the Example 1 was taken and the state of the adhesive was checked. FIG. 4 shows the result.

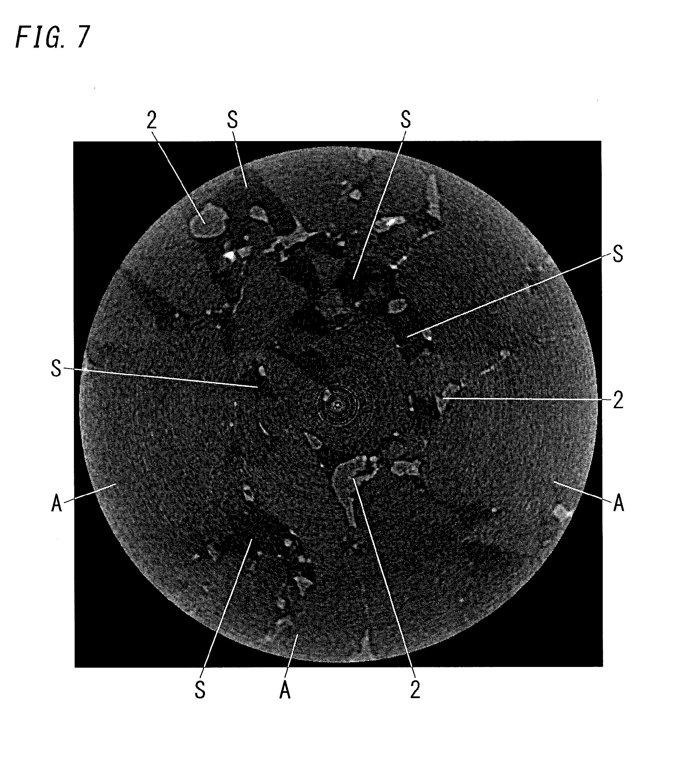

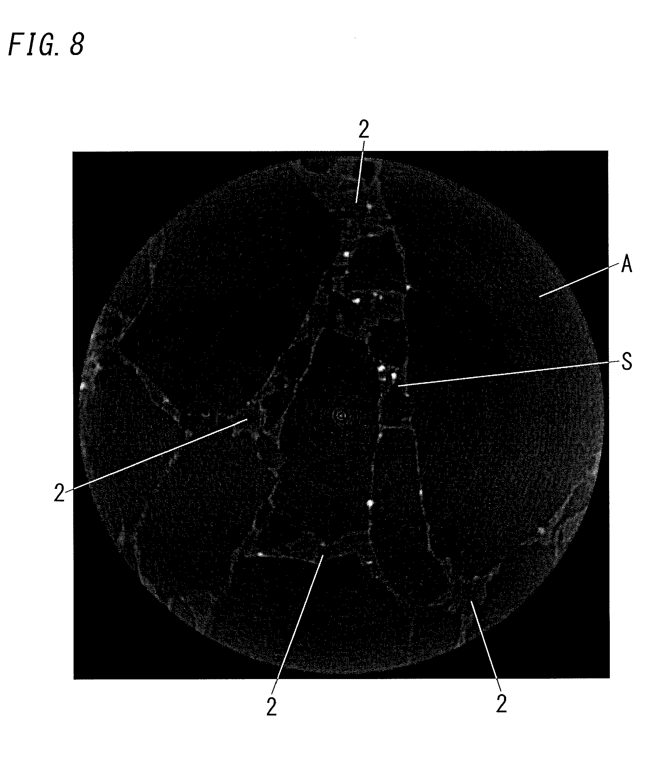

The states of the adhesive in the thermal insulators of the Example 1 and the Comparative Example 3 were observed using the X-ray CT method. The measurements were made under a condition where the voltage and current of the X-ray tube were 60 kV and 100 µA, and total 720 images of the sample were obtained by taking an image of the sample each time the sample was rotated by 0.5 degrees and these images were combined to give an entire image of the sample. FIG. 7 shows the result regarding the Example 1. FIG. 8 shows the result regarding the Comparative Example 3.

**[Table 1]**

| | Strength (MPa) | Thermal Conductivities (mW/mK) |
|---|---|---|
| Example 1 | 0.08 | 15 |
| Example 2 | 0.07 | 16 |
| Example 3 | 0.1 | 18 |
| Example 4 | 0.14 | 15 |
| Example 5 | 0.13 | 15 |
| Example 6 | 0.1 | 16 |
| Example 7 | 0.09 | 14 |
| Comparative Example 1 | 0.01 | 13 |
| Comparative Example 2 | - | - |
| Comparative Example 3 | 0.15 | 28 |
| Comparative Example 4 | - | - |
| Comparative Example 5 | 0.28 | 24 |
| Comparative Example 6 | - | - |

As shown in Table 1, in the Comparative Example 1 in which any adhesive was not used, the strength was poor.

In the Comparative Example 2, since the unsaturated polyester resin was used as the adhesive material including thermosetting resin, the difference between the solubility parameter of the adhesive material in a molten state and the solubility parameter of the aerogel particles was less than 4. The melted adhesive material therefore would not be repelled by the surfaces of the silica aerogel particles and the adhesive material intruded into the fine pores of the silica aerogel particles. As a result, it was not possible to measure the strength and the thermal conductivities of the thermal insulator, because the thermal insulator was not sufficiently solidified to form a molded product.

In the Comparative Example 3, although the pores were not intruded by the resin, the adhesive was attached to the surfaces of the silica aerogel particles in the form of layers and the layers of the adhesive were connected linearly and therefore the thermal paths were formed. This deteriorates the thermal insulating properties.

In the Comparative Example 4, since it was heated to a temperature above the melting point of the adhesive material of thermoplastic resin in the molding process, the adhesive material intruded into the fine pores of the silica aerogel particles. As a result, it was not possible to measure the strength and the thermal conductivities of the thermal insulator, because the thermal insulator was not sufficiently solidified to form a molded product.

In the Comparative Example 5, since it has an increased packing density in the molding process, the adhesive was attached to the surfaces of the silica aerogel particles in the form of layers, and therefore the thermal paths were formed. This deteriorates the thermal insulating properties.

In the Comparative Example 6, the silica aerogel particles have a small average particle size, and also there is no sufficient amount of the adhesive material with respect to the surface area of the silica aerogel particles. Hence adhesion points decreased and thus solidification failed. As a result, it was not possible to measure the strength and the thermal conductivities of the thermal insulator, because the thermal insulator was not sufficiently solidified to form a molded product.

In contrast, according to the Examples 1 to 7, it was possible to achieve both sufficient strength and thermal insulating properties.

According to the Examples 4 and 5, an adhesive material having a structurally-flexible (in the Example 4 rubber-modified, and in the Example 5 cashew-modified) skeleton was used. In these cases, it was possible to increase the strength while the thermal insulating properties were maintained.

According to Example 6, it was found that, in some ranges, the thermal conductivities of the thermal insulator did not so increase with an increase in the density thereof, and accordingly it was confirmed that the strength thereof was be able to be increased while thermal conductivities thereof were maintained as possible.

According to the Example 7, the particle sizes of the aerogel particles were adjusted by mixing the group of relatively small sized-aerogel particles and the group of relatively large sized-aerogel particles, so that the air holes in the molded product were reduced and the aerogel particles were packed densely. The thermal insulating properties thereof can be improved accordingly.

As shown in the electron micrograph of FIG. 4, it was confirmed that the adhesive **2** existing as particles was attached to the surfaces of the aerogel particles **A.** Since the adhesive **2** exists as particles, the plurality of aerogel particles **A** were bonded at spots.

As shown in the X-ray CT image of FIG. 7, it was confirmed that adjacent aerogel particles **A** were bound to each other with the adhesive **2** as particle in the Example 1. It was also confirmed, from FIG. 7, that a plurality of air gaps **S** existed in the thermal insulator **B.** In contrast, from the X-ray CT image of FIG, 8, it was confirmed that adjacent aerogel particles **A** were bound to each other with the adhesive **2** shaped like a face or a mesh in the Comparative Example 3. It was also confirmed, from FIG. 8, that few air gaps **S** existed therein. Consequently, the Example 1 has improved thermal insulating properties and also an improved strength compared with the Comparative Example 3.

### REFERENCE SIGNS LIST

- **A**:: aerogel particle
- **B**:: thermal insulator
- **2**:: adhesive

## Claims

1. A thermal insulator formed by bonding a plurality of aerogel particles with adhesive,
the aerogel particles having an average particle size of 500 µm or more,
the adhesive existing as particles on surfaces of the aerogel particles, and
a ratio (adhesive/aerogel particle) of an average particle size of the adhesive to the average particle size of the aerogel particles falling within a range of 1/200 to 1/10.

2. The thermal insulator according to claim 1, wherein a particle size distribution of the aerogel particles has a peak at a particle size of 500 µm or more and another peak at a particle size of less than 500 µm.

3. The thermal insulator according to claim 1 or 2, comprising 5 to 30 parts by mass of the adhesive per 100 parts by mass of the aerogel particles.

4. A method for producing the thermal insulator according to any one of claims 1 to 3, the adhesive being made from an adhesive powder including thermosetting resin, a difference between a solubility parameter of the adhesive powder in a molten state and a solubility parameter of the aerogel particles is four or more, and
the method comprising:
attaching the adhesive powder to surfaces of the aerogel particles; and
melting the adhesive powder on the surfaces of the aerogel particles by heat and thereafter curing the adhesive powder so that the aerogel particles are bonded with the cured particles of the adhesive.

5. A method for producing the thermal insulator according to any one of claims 1 to 3, wherein the adhesive being made from an adhesive powder including thermoplastic resin,
the method comprising:
attaching the adhesive powder to surfaces of the aerogel particles;
softening the adhesive powder on the surfaces of the aerogel particles by heating the adhesive powder at a temperature which is lower than a melting point as well as higher than a softening point of the thermoplastic resin; and
thereafter cooling the adhesive powder to a temperature lower than the softening point of the thermoplastic resin so that the aerogel particles are bonded with solidified particles of the adhesive.

## Amended claims

### Amended claims under Art. 19.1 PCT

**1.** A thermal insulator formed by bonding a plurality of aerogel particles with adhesive,
the aerogel particles having an average particle size of 500 µm or more,
the adhesive existing as particles on surfaces of the aerogel particles, a ratio (adhesive/aerogel particle) of an average particle size of the adhesive to the average particle size of the aerogel particles falling within a range of 1/200 to 1/10, and
the adhesive including either cured thermosetting resin or solidified thermoplastic resin.

**2.** The thermal insulator according to claim 1, wherein a particle size distribution of the aerogel particles has a peak at a particle size of 500 µm or more and another peak at a particle size of less than 500 µm.

**3.** The thermal insulator according to claim 1 or 2, comprising 5 to 30 parts by mass of the adhesive per 100 parts by mass of the aerogel particles.

**4.** A method for producing the thermal insulator according to any one of claims 1 to 3, the adhesive being made from an adhesive powder including thermosetting resin, a difference between a solubility parameter of the adhesive powder in a molten state and a solubility parameter of the aerogel particles is four or more, and
the method comprising:
attaching the adhesive powder to surfaces of the aerogel particles; and
melting the adhesive powder on the surfaces of the aerogel particles by heat and thereafter curing the adhesive powder so that the aerogel particles are bonded with the cured particles of the adhesive.

**5.** A method for producing the thermal insulator according to any one of claims 1 to 3, wherein the adhesive being made from an adhesive powder including thermoplastic resin,
the method comprising:
attaching the adhesive powder to surfaces of the aerogel particles;
softening the adhesive powder on the surfaces of the aerogel particles by heating the adhesive powder at a temperature which is lower than a melting point as well as higher than a softening point of the thermoplastic resin; and
thereafter cooling the adhesive powder to a temperature lower than the softening point of the thermoplastic resin so that the aerogel particles are bonded with solidified particles of the adhesive.
